Europäisches Patentamt

European Patent Office

Office européen des brevets

(19)

(11) Veröffentlichungsnummer : **0 054 751**
**B1**

(12)

# EUROPÄISCHE PATENTSCHRIFT

(45) Veröffentlichungstag der Patentschrift :
24.04.85

(21) Anmeldenummer : 81109828.4

(22) Anmeldetag : 23.11.81

(51) Int. Cl.⁴ : **F 16 L   9/12, F 24 D   3/00**

(54) Kunststoffrohr mit sauerstoffdichter Ummantelung.

(30) Priorität : 15.12.80 DE 3047181

(43) Veröffentlichungstag der Anmeldung :
30.06.82 Patentblatt 82/26

(45) Bekanntmachung des Hinweises auf die Patenterteilung : 24.04.85 Patentblatt 85/17

(84) Benannte Vertragsstaaten :
AT BE CH DE FR GB LI NL SE

(56) Entgegenhaltungen :
EP-A- 0 030 091
GB-A- 1 171 122
GB-A- 1 183 313
US-A- 3 561 493

(73) Patentinhaber : HOECHST AKTIENGESELLSCHAFT
Postfach 80 03 20
D-6230 Frankfurt am Main 80 (DE)

(72) Erfinder : Schad, Alfred
Hauberisserstrasse 21
D-6200 Wiesbaden (DE)
Erfinder : Heyse, Klaus
Kelkheimer Strasse 10
D-6232 Bad Soden (DE)

**Beschreibung**

Die Erfindung betrifft ein Kunststoffrohr mit einem mehrlagigen Mantel, der eine dehnfähige, für Sauerstoff praktisch undurchlässige Sperrlage umfaßt.

Das erfindungsgemäß ummantelte Kunststoffrohr findet insbesondere im Heizungssektor für Fußboden-Warmwasserheizungen Anwendung.

Neben Rohren aus Stahl oder Kupfer haben in den letzten Jahren Kunststoffrohre, insbesondere Rohre aus Polyolefinen, Bedeutung im Heizungsbau erlangt.

Kunststoffrohre haben jedoch den Nachteil, daß ihre Wandungen bereits bei Raumtemperatur eine unerwünscht hohe Durchlässigkeit für Sauerstoff besitzen. Die Sauerstoffdurchlässigkeit von Rohren, die beispielsweise aus Polyethylen hoher Dichte bestehen und eine Wandstärke von beispielsweise 2 mm haben, beträgt bei 23 °C ca. 3 cm³/m Rohrlänge × Tag × bar. Das Rohr hat einen Außendurchmesser von 20 mm.

Über das in den Rohren des Heizsystems zirkulierende Heizwasser als Wärmeträger gelangt daher ständig Sauerstoff in den Heizkreislauf und damit in Kontakt mit Eisenteilen des Heizungssystems, beispielsweise dem Heizkessel oder Radiatoren. Die im Heizkreislauf befindlichen Eisenteile unterliegen daher der Korrosion ; es besteht die Gefahr, daß sie nach einigen Jahren des Gebrauchs durch Korrosion unbrauchbar werden.

Um den genannten Nachteil von Kunststoffrohren zu beseitigen, ist vorgeschlagen worden, die in Heizsystemen verwendeten Rohre aus Kunststoff mit einem Mantel zu umgeben, der aus einem Folienlaminat besteht, das aus einer Schicht aus streckorientierter Polyesterfolie als Trägermaterial, Folie aus Aluminium als sauerstoffundurchlässige Sperrlage und einer Schicht aus Heißkleber besteht.

Die Polyesterfolie bildet die Außenseite des Mantels, die Kleberschicht grenzt an die Oberfläche des Rohres an und ist mit dieser durch Verklebung verbunden.

Die bekannte Mantelhülle hat jedoch den Nachteil, daß ihre Aluminiumschicht nach Dehnbeanspruchung beim Biegen des Rohres sowie durch Wärmeausdehnung desselben nicht mehr hinreichend sauerstoffundurchlässig ist, da sie dabei rissig wird. Bei der Wärmeausdehnung des Rohres wirkt sich aus, daß der Wärmeausdehnungskoeffizient des das Rohr bildenden Kunststoffs wesentlich größer ist als der Wärmeausdehnungskoeffizient der mit dem Rohr verbundenen Sperrlage aus Aluminium.

Die ummantelten Rohre werden teilweise gebogen, um sie in gekrümmten Zustand überzuführen. Dabei wird der das Rohr umgebende Mantel insbesondere dann, wenn die gebogene Rohrkrümmung einen kleinen Radius hat, stark auf Dehnung beansprucht. Nach der Verlegung der ummantelten Rohre wird die Sperrlage des Mantels dadurch auf Dehnung beansprucht, daß sich der Rohrdurchmesser vergrößert, wenn das Rohr heißes Wasser führt. Die Sperrschicht aus Aluminiumfolie ist dann nicht mehr undurchlässig für Sauerstoff.

In der GB-A-1 171 122 werden ebenfalls Plastikrohre beschrieben, die mit einer Metallfolie überzogen sind. Sie dienen dem Zweck, elektrische Kabel vor Korrosion durch Feuchtigkeit zu schützen. Auch die in dieser Druckschrift beschriebenen Rohre verlieren aus den im Vorstehenden erläuterten Gründen bei häufiger Erwärmung ihre Sperreigenschaften.

Der Erfindung liegt daher die Aufgabe zugrunde, Kunststoffrohre mit einem Mantel vorzuschlagen, der eine dehnfähige, für Sauerstoff praktisch undurchlässige Sperrlage umfaßt.

Die der Erfindung zugrundeliegende Aufgabe wird gelöst durch ein ummanteltes Rohr der in Anspruch 1 angegebenen Ausbildung.

Besondere Ausgestaltungen des erfindungsgemäßen Rohres nach Anspruch 1 sind in den auf diesen rückbezogenen Unteransprüchen konkretisiert.

Ein gegen Gasdiffusion geschütztes Rohr aus Plastikmaterial ist bereits in der EP-A-30 091 (Stand der Technik gemäß Artikel 54 (3) EPÜ) vorgeschlagen worden, die es sich zur Aufgabe gemacht hat, ein flexibles und gasdichtes Rohr zur Verwendung als Heizungsrohr zu schaffen, welches coextrudierbar ist. Das in dieser Druckschrift beschriebene Rohr umfaßt ein inneres, wasserdichtes Plastikmaterial und eine äußere gegen mechanische Beschädigung resistente Schicht, wobei zwischen beiden eine Zwischenschicht angeordnet ist, die gegen Gasdiffusion resistent ist und die sowohl mit der inneren als auch mit der äußeren Schicht verbunden ist. Die gegen Gasdiffusion resistente Schicht besteht nach der Lehre dieser Druckschrift aus Polyvinylalkohol, Polyacrylnitril oder Polyvinylidenchlorid. Demgegenüber umfaßt die vorliegende Erfindung neben der Sperrlage für Sauerstoff aus teilweise in der genannten Druckschrift bereits erwähnten Materialien auch noch eine siegelfähige Schicht, die an den Rohrumfang angrenzt und mit diesem durch Versiegelung verbunden ist.

Unter einer dehnfähigen, für Sauerstoff praktisch undurchlässigen Sperrlage des Mantels ist definitionsgemäß eine solche zu verstehen, die aus Kunststoff besteht und bei Raumtemperatur mindestens 40 %, vorteilhaft mehr als 100 % dehnbar sowie auch im gedehnten Zustand praktisch undurchlässig für Sauerstoff ist.

Die Sperrlage hat eine Dicke von wenigstens 5 μm, bevorzugt hat sie eine Dicke im Bereich von 12 bis 25 μm.

Die Sperrlage besitzt einen Permeationswert für Sauerstoff, der nicht mehr als 5 cm³/m² × Tag × bar bei 23 °C und einer relativen Luftfeuchte von 25 % beträgt. Ein ummanteltes Rohr mit einem Durchmesser von 20 mm, dessen Sperrlage durch den angegebenen Permeationswert für Sauerstoff charakterisiert ist, hat eine Sauerstoffdurchlässigkeit von nicht mehr als 0,3 cm³/m Rohrlänge × Tag × bar.

Die Sperrlage besteht aus synthetischem thermoplastischem Kunststoff, ausgewählt aus einer Gruppe, umfassend Polyvinylalkohol sowie Vinylalkohol-Ethylen-Copolymerisate, die zu mengenmäßig geringem Anteil aus copolymerisiertem Ethylen bestehen ; vorteilhaft besitzt das Copolymerisat einen Anteil an copolymerisiertem Ethylen von höchstens 40 Mol-%, insbesondere bevorzugt nicht mehr als 20 Mol-%, bezogen auf das Gesamtgewicht des Copolymerisats.

Unter Vinylalkohol-Ethylen-Copolymerisaten sind definitionsgemäß solche zu verstehen, die durch Copolymerisation von Ethylen mit Vinylacetat und nachfolgender praktisch vollständiger Verseifung des copolymerisierten Vinylacetats derart entstehen, daß wenigstens 97 Gew.-% der Acetylgruppen des Copolymerisats durch Verseifung in OH-Gruppen umgewandelt sind.

Unter einer Sperrlage aus Polyvinylalkohol ist ein solches Polymerisat zu verstehen, das durch Polymerisation von Vinylacetat und nachfolgender praktisch völliger Verseifung desselben derart entsteht, daß wenigstens 97 Gew.-% Acetatgruppen durch Verseifung in OH-Gruppen umgewandelt sind.

Die Sperrlage kann auch aus Polyacrylnitril bestehen.

Die Sperrlage besteht vorteilhaft aus Kunststoffolie, insbesondere aus biaxial streckorientierter Kunststoffolie mit den bezeichneten Eigenschaften.

Die zweite, unmittelbar an die Umfangsfläche des Rohres angrenzende Lage des Mantels besteht aus synthetischem Polymerisat, das durch Wärmeeinwirkung in siegelfähigen Zustand überführbar ist, beispielsweise aus Polyolefin, bevorzugt aus Polyethylen.

Nach Wiederabkühlung des siegelfähigen Werkstoffs ist dieser befähigt, einen festen Siegelverbund zu bilden. Die Dicke der unmittelbar an die Rohrumfangsfläche angrenzenden siegelfähigen Mantellage beträgt bevorzugt 20 bis 50 μm.

Die zweite Mantellage ist mit der Umfangsfläche des Rohres durch Siegelung fest verbunden.

Das ummantelte Rohr kann vorteilhaft derart ausgebildet sein, daß auf der Außenseite der Sperrlage des Mantels eine als Schutzschicht gegen mechanische und/oder chemische Einwirkung dienende, aus zäh-elastischem, thermoplastischem Kunststoff bestehende Lage angeordnet ist ; diese kann beipsielsweise aus Polyolefin, bevorzugt Polyethylen, bestehen und beispielsweise eine Dicke von 50 μm besitzen.

Bei der angegebenen Ausbildung des Mantels befindet sich zwischen der Schutzschicht und der Sperrlage des Mantels eine dünne Schicht aus chemischem Stoff, der infolge seines chemischen Aufbaus befähigt ist, feste Klebeverbindung zwischen der Schutzschicht und der Sperrlage herzustellen, beispielsweise eine Schicht aus Zweikomponentenkleber auf Polyurethanbasis. Die haftvermittelnde Schicht hat eine Dicke, die im Vergleich zur Dicke der Sperrlage bzw. der Schutzschicht vernachlässigbar gering ist.

Der das Rohr umgebende Mantel ist in Form und Abmessung seines Querschnitts der Form und Abmessung des Rohres angepaßt, das er umhüllt ; der Mantel liegt mit seiner Innenseite der Außenseite des Rohres unmittelbar an.

Das ummantelte Rohr kann auch in der Weise ausgebildet sein, daß auf der Innenseite der durchsichtigen Schutzschicht des Mantels eine Metallschicht aufgedampft ist.

Gemäß einer ersten Erfindungsvariante besteht der Rohrmantel aus einem Hohlzylinderkörper, der aus einem rechteckigen Folienlaminatzuschnitt gebildet ist. Der Hohlzylinderkörper besitzt einen geraden längsaxialen Schlitz in Form einer längsaxialen Zone, im Bereich welcher Seitenrandbereiche des den Hohlkörper bildenden Folienzuschnitts überlappen, wobei die Ränder der überlappenden Seitenrandbereiche parallel und im Abstand zueinander verlaufen. Der den Hohlkörper bildende Folienlaminatzuschnitt bzw. die durch ihn gebildete Hohlkörperwandung ist beispielsweise wie folgt dreilagig aufgebaut : Er bzw. die Mantelwandung besteht aus einer Lage aus bevorzugt biaxial streckorientierter Folie aus Polyvinylalkohol, Vinylalkohol-Ethylen-Copolymerisat oder Polyacrylnitril, die mit ihrer einen Oberfläche an eine Schutzschichtlage aus Polyolefin, bevorzugt Polyethylen, angrenzt, und mit dieser verbunden ist, während an die andere Oberfläche der bezeichneten Folie eine Lage aus siegelfähigem Werkstoff der angegebenen Art angrenzt und mit dieser verbunden ist. Der wie angegeben ausgebildete Hohlzylinderkörper kann um das Rohr dadurch gebildet werden, daß man einen rechteckigen Folienlaminatzuschnitt des genannten Aufbaus um seine Längsachse als Biegelinie um das Rohr unter Bildung des wie angegeben ausgebildeten Mantel biegt.

Der aus dem Folienlaminat bestehende Mantel der genannten raumförmlichen Ausbildung umgibt die Rohrumfangsfläche derart, daß die siegelfähige Laminatlage unmittelbar an diese angrenzt und die Schicht des Mantels aus Polyolefin bzw. Polyethylen eine Außenseite bildet. Mantel und Rohrumfangsfläche sind im Grenzflächenbereich durch Versiegelung vollflächig oder in bestimmten Abständen miteinander verbunden.

Im Überlappungsbereich des Mantels sind die Mantelteile im Grenzflächenbereich zwischen siegelfähiger Lage und Schutzschichtlage durch Versiegelung miteinander verbunden.

Zur Herstellung eines wie angegeben ummantelten Rohres bestimmter Länge geht man von einem rechteckigen Folienlaminatzuschnitt des geannten Aufbaus aus, dessen Länge der Länge des zu ummantelnden Rohres angepaßt und dessen Breite größer als der Rohrumfang ist. Der Zuschnitt wird dann derart um seine Längsachse als Biegelinie um das zu ummantelnde Rohr gebogen, daß aus dem Zuschnitt ein Hohlzylinderkörper entsteht, der einen geraden, längsaxialen Schlitz in Form einer langsaxialen Zone besitzt, im Bereich welcher Seitenrandbereiche des den Hohlkörper bildenden Zuschnitts überlappen, wobei dessen Seitenränder parallel und abständig zueinander verlaufen. Die Anordnung des Hohlzylinderkörpers um das Rohr erfolgt dabei in der Weise, daß die siegelfähige Lage des diesen bildenden Folienlaminatzuschnitts der Rohrumfangsfläche zugewandt ist und unmittelbar an diese angrenzt. Die Schutzschicht des den Hohlzylinderkörper bildenden Zuschnitts bildet dann die Mantelaußenseite. Der Mantel wird dann mit Wärme einer Temperatur von beispielsweise 150 °C beaufschlagt, die ausreicht, die siegelfähige Mantellage derart zu aktivieren, daß sie zur Verklebung des Mantels mit dem Rohr führt. Der Mantel wird dann unter leichtem Preßdruck an den Rohrumfang angepreßt und dann auf Raumtemperatur abgekühlt. Nach Abkühlung des Mantels besteht zwischen diesem und dem Rohr feste Siegelverbindung.

Der Überlappungsbereich des Mantels hat bei Verwendung der beispielhaften Verbundfolie — von außen nach innen betrachtet — folgenden Aufbau :

Polyolefin-, bevorzugt Polyethylenlage/Lage aus Polyvinylalkohol/siegelfähige Lage/Polyolefin-, bevorzugt Polyethylenlage/Lage aus Polyvinylalkohol/siegelfähige Lage ; letztere grenzt an die Rohrumfangsfläche an.

Die Siegelverbindung im Überlappungsbereich des Mantels erfolgt in der Grenzfläche zwischen der Polyolefinlage eines Überlappungsteils und der an diese angrenzenden siegelfähigen Lage des anderen Überlappungsteiles. ·

In einer zweiten Erfindungsvariante kann das ummantelte Rohr derart ausgebildet sein, daß der Mantel aus einem spiralig überlappend gewickelten Folienstreifen besteht, der dem Rohrumfang unter Wickelspannung anliegt. Der Aufbau des Folienstreifens entspricht beispielsweise dem Aufbau des zur Ausbildung der ersten Erfindungsvariante verwendeten dreilagigen Folienlaminats.

Das Folienband wird spiralig derart um den gesamten Umfang des Rohres über dessen gesamte Länge gewickelt, daß die siegelfähige Schicht des Folienbandes an die Rohrumfangsfläche angrenzt.

Der gewickelte, durch Wickelspannung an die Rohroberfläche angepreßte Mantel wird dann mit Wärme und vorteilhaft zusätzlich mit Druck beaufschlagt und danach auf Raumtemperatur abgekühlt.

In einer dritten Erfindungsvariante ist die Sperrlage nahtlos ausgebildet und besteht beispielsweise aus extrudierbarem Polyvinylalkohol. Die dritte Erfindungsvariante ist dadurch herstellbar, daß man auf die Umfangsfläche des zu ummantelnden Kunststoffrohres zunächst Haftvermittler, beispielsweise solchen auf Basis von Ethylen-Copolymerisat mit überwiegendem Anteil an copolymerisiertem Ethylen, aufbringt und danach auf dem wie angegeben vorbehandelten Kunststoffrohr eine Sperrlage aufbringt, die beispielsweise aus Polyvinylalkohol besteht. Die Ummantelung des Rohres mit Polyvinylalkohol erfolgt in bekannter Weise durch ein Extrusionsverfahren mittels hierfür bekannter Vorrichtungen, wobei ein nahtloser Überzug aus Polyvinylalkohol auf dem Rohr entsteht.

Gegebenenfalls wird auf der Außenseite des nahtlosen Überzugs aus Polyvinylalkohol eine dünne Schicht aus haftvermittelnder chemischer Substanz, beispielsweise Ethylen-Copolymerisat mit überwiegendem Anteil an copolymerisiertem Ethylen, aufgebracht und danach auf diese eine nahtlose Schutzschicht, beispielsweise aus Polyolefin, bevorzugt aus Polyethylen. Die nahtlose Schutzschicht kann beispielsweise mittels eines Extrusionsverfahrens in bekannter Weise und mit hierfür bekannten Vorrichtungen aufgebracht werden, es ist auch möglich, alle genannten Schichten mittels eines Coextrusionsverfahrens zugleich aufzubringen. Geeignete Coextrusionsvorrichtungen sind bekannt.

Ein aus vernetztem Polyethylen bestehendes Kunststoffrohr mit einem Außendurchmesser von 20 mm und einer Wanddicke von 2 mm hat bei 50 °C eine Sauerstoffdurchlässigkeit von 7,5 cm³/m Rohrlänge × Tag × bar. Ein derartiges Kunststoffrohr hat, wenn es erfindungsgemäß von einem Mantel umgeben ist, der eine beispielsweise 12 µm dicke Sperrlage aus biaxial streckorientierter Polyvinylalkoholfolie umfaßt, eine Durchlässigkeit für Sauerstoff von 0,003 cm³/m Rohrlänge × Tag × bar. Im letztgenannten Fall ist unter Sauerstoffdurchlässigkeit diejenige Menge Sauerstoff zu verstehen, die unter den genannten Bedingungen durch die Ummantelung und die Rohrwand in den Rohrhohlraum einzudringen vermag.

Die Messungen wurden jeweils bei einer relativen Feuchte von 25 % unter sonst vergleichbaren Versuchsbedingungen durchgeführt.

Zur Herstellung von erfindungsgemäßen Rohren mit nahtlosem Mantel kann man auch gelangen, indem man Rohr und Mantel durch Coextrusion zugleich bildet.

Die zwei Figuren umfassende Zeichnung soll die Erfindung beispielhaft erläutern.

In der Figur 1 ist im Querschnitt und in schematischer perspektivischer Darstellung ein Rohr gemäß der erläuterten ersten Erfindungsvariante dargestellt.

Figur 2 zeigt in schematischer und halb perspektivischer Darstellung und vergrößert einen Ausschnitt A aus Figur 1. Die Elemente des in Figur 2 gezeigten ummantelten Rohres sind nicht maßstäblich dargestellt.

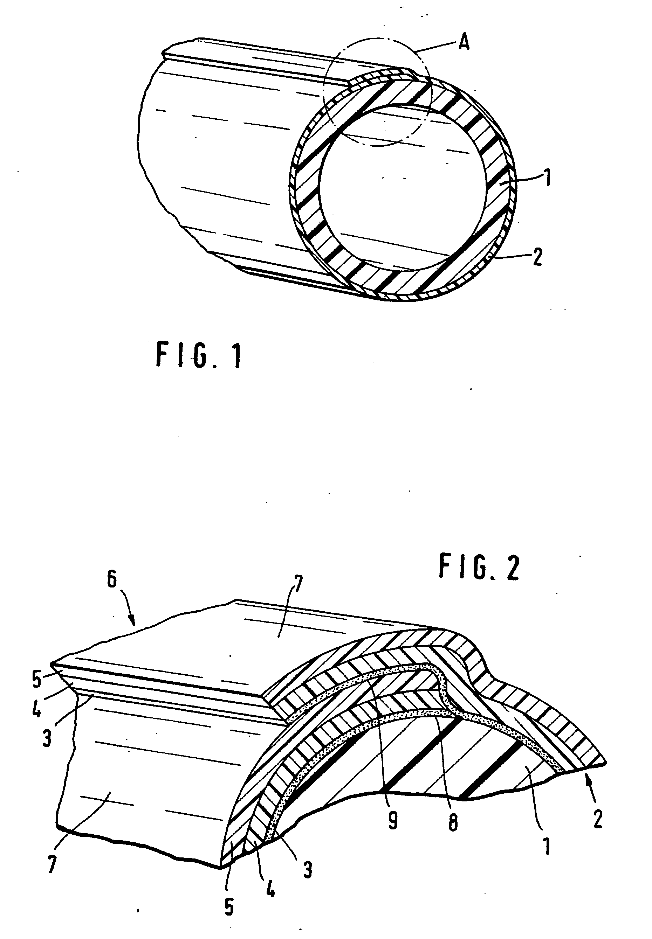

In der Figur 1 bedeutet 1 das Kunststoffrohr, 2 den Rohrmantel in seiner Gesamtheit. Die bauliche Ausbildung des Mantels ist in Figur 1 aus Gründen zeichnerischer Vereinfachung nicht dargestellt, sie wird in Figur 2 gezeigt, wobei diese den Ausschnitt A aus Figur 1 vergrößert dargestellt wiedergibt.

In der Figur 2 haben die Ziffern 1 und 2 dieselbe Bedeutung wie in Figur 1. Es ist 3 die siegelfähige Lage des Rohrmantels, 4 ist die Sperrlage des Mantels und 5 die Schutzschichtlage desselben. 6 ist die Überlappungszone des Mantels, 7 die Mantelaußenseite, 8 die Grenzfläche zwischen Mantel und Kunststoffrohr 1, im Bereich welcher Mantel und Rohr durch Versiegelung miteinander verbunden sind, 9 ist die Grenzfläche (Überlappungszone) im Überlappungsteil 6 des Mantels ; im Bereich der Genzfläche 9 des Überlappungsteils sind die sich überlappenden Mantelteile durch Versiegelung miteinander verbunden.

## Patentansprüche

1. Kunststoffrohr (1) mit einem den Rohrumfang allseitig umgebenden Mantel (2) aus wenigstens zweilagigem Folienlaminat, umfassend eine Sperrlage (4) für Sauerstoff und eine siegelfähige Schicht (3), die an den Rohrumfang angrenzt und mit diesem durch Versiegelung unter Wärmeeinwirkung verbunden ist, dadurch gekennzeichnet, daß die Sperrlage (4) des Mantels aus synthetischem Polymerisat, ausgewählt aus einer Gruppe umfassend Polyvinylalkohol, Vinylalkohol-Ethylen-Copolymerisat oder Polyacrylnitril, besteht, dehnfähig und für Sauerstoff praktisch undurchlässig ist.

2. Kunststoffrohr nach Anspruch 1, dadurch gekennzeichnet, daß die Sperrlage (4) eine biaxial streckorientierte Folie ist.

3. Kunststoffrohr nach Anspruch 1 oder 2, dadurch gekennzeichnet, daß der Rohrmantel (2) dreilagig aufgebaut ist, wobei die Außenseite desselben durch eine Schutzlage (5) aus Polyolefin gebildet ist.

4. Kunststoffrohr nach Anspruch 3, dadurch gekennzeichnet, daß die Schutzlage (5) des Mantels (2) aus Polyethylen besteht.

5. Kunststoffrohr nach einem der Ansprüche 1, 3 oder 4, dadurch gekennzeichnet, daß sowohl der Mantel (2) in seiner Gesamtheit als auch die ihn jeweils bildenden Lagen (3, 4, 5) unterbrechungsfrei nahtlos ausgebildet sind.

6. Kunststoffrohr nach einem der Ansprüche 1 bis 4, dadurch gekennzeichnet, daß der Mantel (2) aus einem Hohlzylinderkörper besteht, der aus einem rechteckigen Folienlaminatzuschnitt aufgebaut ist und der einen geraden längsaxialen Schlitz in Form des geraden Uberlappungsbereiches (6) besitzt.

7. Kunststoffrohr nach einem der Ansprüche 1 bis 4, dadurch gekennzeichnet, daß der Mantel (2) aus über die gesamte Länge der Umfangsfläche des Rohres (1) spiralig überlappend gewickeltem Folienband besteht.

8. Verwendung eines Kunststoffrohres nach einem der Ansprüche 1 bis 7 als Heizungsrohr, insbesondere für Fußbodenheizungen.

## Claims

1. A plastic pipe (1) with a casing (2) composed of a film laminate of at least two layers, which surrounds the circumference of the pipe on all sides and comprises a barrier layer (4) for oxygen and a sealable layer (3) which is adjacent to the circumference of the pipe and is attached to the latter by heat sealing, wherein the barrier layer (4) of the casing, composed of a synthetic polymer selected from a group comprising polyvinyl alcohol, vinyl alcohol/ethylene copolymer or polyacrylonitrile, is elastic and is virtually impermeable to oxygen.

2. A plastic pipe as claimed in claim 1, wherein the barrier layer (4) is composed of a biaxially oriented film.

3. A plastic pipe as claimed in claim 1 or 2, wherein the casing (2) is composed of three layers in such a way that the outer face of the casing is formed by a protective layer (5) comprised of a polyolefin.

4. A plastic pipe as claimed in claim 3, wherein the protective layer (3) of the casing (2) consists of polyethylene.

5. A plastic pipe as claimed in any of claims 1, 3 or 4, wherein both, the casing (2) in its entirety, and the layers (3, 4, 5) forming it, are each constructed in a seamless manner free from interruptions.

6. A plastic pipe as claimed in any of claims 1 to 4, wherein the casing (2) consists of a hollow cylindrical element which is formed from a rectangular film laminate blank and has a straight slit running along its longitudinal axis, which constitutes the straight overlapping zone (6).

7. A plastic pipe as claimed in any of claims 1 to 4, wherein the casing (2) is composed of a film tape which is wound helically, in an overlapping manner, over the entire length of the circumferential surface of the pipe (1).

8. Use of a plastic pipe as claimed in any of claims 1 to 7 as a heating pipe, in particular for underfloor heating systems.

## Revendications

1. Tube en matière plastique (1) pourvu d'une gaine (2) entourant entièrement la périphérie du tube et faite d'une feuille stratifiée ayant au moins deux couches, comprenant une couche d'arrêt (4) pour l'oxygène et une couche soudable (3) qui est au contact de la surface externe du tube et rendue solidaire de celle-ci par soudage sous l'effet de la chaleur, caractérisé en ce que la couche d'arrêt (4) de la gaine est en polymère synthétique, choisi dans un groupe qui comprend l'alcool polyvinylique, un copolymère alcool vinylique-éthylène ou le polyacrylonitrile, qu'elle est extensible et pratiquement imperméable à l'oxygène.

2. Tube en matière plastique selon la revendication 1, caractérisé en ce que la couche d'arrêt (4) est une feuille orientée biaxialement par étirage.

3. Tube en matière plastique selon la revendication 1 ou 2, caractérisé en ce que la gaine (2) du tube comporte trois couches, la surface externe de cette gaine étant formée par une couche protectrice (5) en polyoléfine.

4. Tube en matière plastique selon la revendication 3, caractérisé en ce que la couche protectrice (5) de la gaine (2) est en polyéthylène.

5. Tube en matière plastique selon la revendication 1, 3 ou 4, caractérisé en ce que, aussi bien la gaine (2) dans son ensemble que les différentes couches qui la constituent (3, 4, 5) sont réalisées en continu et sans soudure.

6. Tube en matière plastique selon l'une des revendications 1 à 4, caractérisé en ce que la gaine (2) est constituée par un corps cylindrique creux réalisé avec un flan rectangulaire d'une feuille stratifiée et présente une fente longitudinale axiale rectiligne sous la forme de la zone de chevauchement rectiligne (6).

7. Tube en matière plastique selon l'une des revendications 1 à 4, caractérisé en ce que la gaine (2) est constituée par un ruban enroulé en spirale avec chevauchement sur toute la longueur de la surface externe du tube (1).

8. Utilisation d'un tube en matière plastique suivant l'une des revendications 1 à 7 comme tube de chauffage, en particulier pour les installations de chauffage par le sol.

F I G. 1

F I G. 2